# EUROPEAN PATENT APPLICATION

(11) **EP 4 250 446 A2**
(43) Date of publication of application: **27.09.2023**
(21) Application number: 22174979.9
(22) Date of filing: 24.05.2022
(51) Int. Cl.: H01M 50/204, H01M 50/233, H01M 50/244, H01M 50/251, H01M 50/289

(54) **ENERGY STORAGE FRAME AND ENERGY STORAGE BATTERY CLUSTER**

(30) Priority: 25.03.2022 CN 202210299222
(71) Applicant: CALB Co., Ltd., Changzhou City, Jiangsu Province (CN)
(72) Inventor: LI, Wei, Luoyang City, Henan Province (CN); SHI, Tengteng, Luoyang City, Henan Province (CN)
(74) Representative: Becker, Eberhard

(57) **Abstract**

An energy storage frame and an energy storage battery cluster. The energy storage frame includes a stand (10) and an insert box storage rack (20). The stand (10) includes a first column (11) and a second column (12) disposed side by side and at intervals. The insert box storage rack (20) is configured to support a battery insert box. The insert box storage rack (20) is disposed on one side of the stand. The insert box storage rack (20) includes first connecting beam (21) and second connecting beam (22). The first connecting beam (21) is connected to the first column along first direction (X). The second connecting beam (22) is connected to the second column (12) along second direction (Y). The first direction (X) is parallel to an insertion direction of the battery insert box. The second direction (Y) is perpendicular to the insertion direction of the battery insert box.

## Description

### BACKGROUND

### Technology Field

The invention relates to the technical field of batteries, and particularly, to an energy storage frame and an energy storage battery cluster.

### Description of Related Art

Energy storage devices are new energy devices that store a battery insert box in an energy storage frame. The connection stability between the storage rack and the column for the battery insert box of the current energy storage frame is poor. In the insertion process, the slot is subjected to the connection failure due to the force of the battery insert box.

### SUMMARY

The invention provides an energy storage frame, which includes:
a stand including a first column and a second column disposed side by side and at intervals;
an insert box storage rack configured to support a battery insert box, in which the insert box storage rack is disposed on one side of the stand, the insert box storage rack includes a first connecting beam and a second connecting beam, the first connecting beam is connected to the first column along a first direction, the second connecting beam is connected to the second column along a second direction, the first direction is parallel to an insertion direction of the battery insert box, and the second direction is perpendicular to the insertion direction of the battery insert box.

The invention provides an energy storage battery cluster, which includes the energy storage frame and at least one battery insert box, and the battery insert box is inserted into the energy storage frame.

### BRIEF DESCRIPTION OF THE DRAWING

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a three-dimensional schematic view illustrating the structure of an energy storage frame of the invention.
FIG. 2 is a schematic view illustrating part of the structure of the energy storage frame shown in FIG. 1.
FIG. 3 is a schematic view illustrating an enlarged structure of part A in FIG. 2.
FIG. 4 is a schematic view illustrating part of the structure of the energy storage frame shown in FIG. 2 from another perspective.
FIG. 5 is a schematic view illustrating an enlarged structure of part B in FIG. 4.
FIG. 6 is a schematic side view illustrating part of the structure of the energy storage frame shown in FIG. 2.
FIG. 7 is a schematic view illustrating the structure of an energy storage battery cluster of the invention.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

### Embodiment 1

One object of the invention is to provide an energy storage frame capable of improving the connection stability between an insert box storage rack and a column.

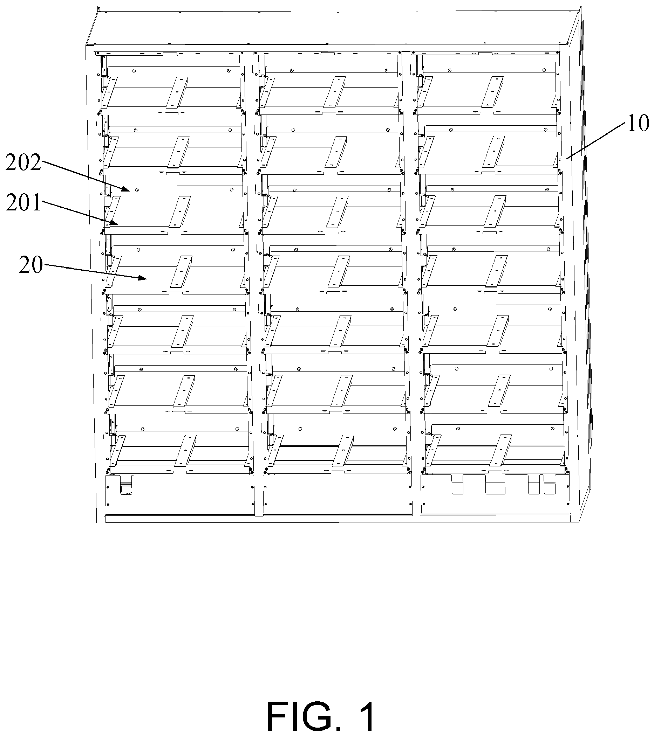

As shown in FIG. 1, the invention provides an energy storage frame including a stand 10 and an insert box storage rack 20. Specifically, the stand 10 is configured to fix the insert box storage rack 20, the energy storage frame includes at least two stands 10 disposed opposite and apart from each other, and the two stands 10 are located on the left and right sides of the energy storage frame, respectively. Multiple insert box storage racks 20 are connected between the two stands 10 and disposed at substantially equal intervals from top to bottom. Meanwhile, it can be applied that only one insert box storage rack 20 is disposed to connect the two stands 10.

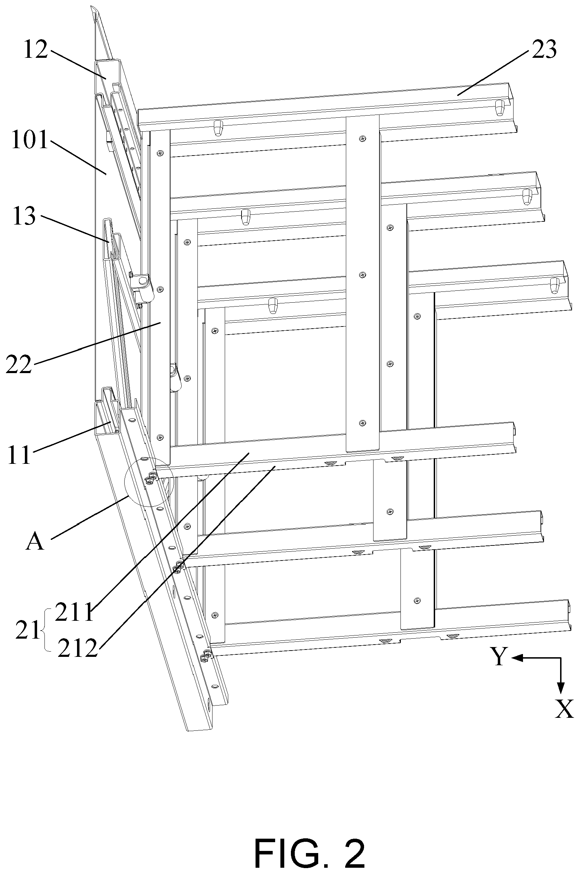

As shown in FIG. 2, FIG. 4, and FIG. 6, the stand 10 includes a first column 11 and a second column 12 disposed side by side and at intervals. In the embodiment, specifically, the stand 10 includes an upright plate 101. The first column 11 and the second column 12 are connected to one side of the upright plate 101 at intervals, the upright plate 101 can position and protect the first column 11 and the second column 12, both the first column 11 and the second column 12 extend in the vertical direction, and the bottom surface of the first column 11 and the bottom surface of the second column 12 both can be in contact with the ground or the plane where it is disposed.

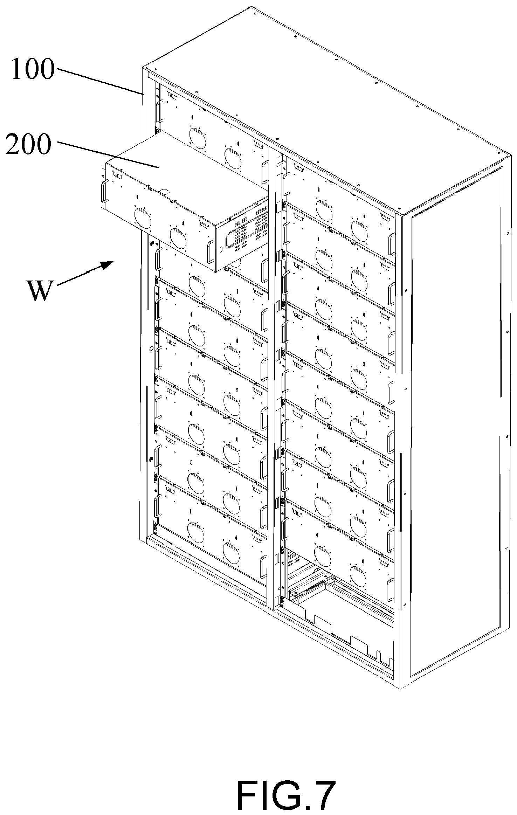

The insert box storage rack 20 is configured to support a battery insert box. When in use, the battery insert box can be inserted into the insert box storage rack 20 from a side of the insert box storage rack 20 that is not connected to the stand 10, and the battery insert box can be disposed within the insert box storage rack 20. For the insertion direction of the battery insert box, refer to the direction indicated by the arrow W in FIG. 7. As shown in FIG. 2, the insert box storage rack 20 is disposed on one side of the stand 10, and the insert box storage rack 20 is disposed horizontally relative to the stand 10, that is, the insert box storage rack 20 is disposed substantially parallel to the ground or the plane where it is disposed. The insert box storage rack 20 includes a first connecting beam 21 and a second connecting beam 22. For example, the insert box storage rack 20 is a rectangular frame structure formed by two first connecting beams 21 and two second connecting beams 22, so as to stably support the battery insert box and minimize the overall weight of the insert box storage rack 20; the first connecting beam 21 is connected to the first column 11 along a first direction X, and the second connecting beam 22 is connected to the second column 12 along a second direction Y. The first direction X is parallel to the insertion direction of the battery insert box, and the second direction Y is perpendicular to the insertion direction of the battery insert box, that is, the projections of the first direction X and the second direction Y on the horizontal plane are perpendicular to each other. Moreover, the horizontal plane is parallel to the cross section of the stand 10, that is, the projections of the first direction X and the second direction Y on the plane where the cross section of the stand 10 is located are perpendicular to each other. Such connection allows the insert box storage rack 20 and the stand 10 to be fixed in two directions, which not only improves the connection strength between the stand 10 and the insert box storage rack 20 but also greatly reduces the risk that the connection position may fail under the insertion force of the battery insert box because there is only one fixed direction between the two, and thus the configuration stability of the battery insert box is secured.

Note that in the embodiment shown in FIG. 1, the first connecting beam 21 is a front beam of the insert box storage rack 20, and the second connecting beam 22 is a side beam of the insert box storage rack 20. When in use, the battery insert box is inserted into the energy storage frame from the position of the front beam, the side beam is disposed parallel to the insertion direction of the battery insert box, and the first direction X is substantially perpendicular to the second direction Y. For example, the included angle of the projections of the first direction X and the second direction Y on the horizontal plane may range from 86° to 93°.

The energy storage frame of the invention, by fixing the connection between the insert box storage rack 20 and the stand 10 in two directions, not only improves the connection strength between the stand 10 and the insert box storage rack 20 but also reduces the risk of the connection position failure resulting from the influence of the insertion force of the battery insert box between the stand 10 and the insert box storage rack 20, and thus the configuration stability of the battery insert box is secured.

Furthermore, when considering the battery insert box is inserted on the insert box storage rack 20, and by the time the battery insert box is just inserted into the insert box storage rack 20, the portion of the insert box storage rack 20 first, in contact with the battery insert box, is subjected to a greater impact, and the portion of the insert box storage rack 20, not in contact with the battery insert box, is basically not subjected to the impact at the time being. When the battery insert box is disposed in place, the portion of the insert box storage rack 20, in contact with the battery insert box at last, is subjected to a relatively large impact, and the action direction of the impact is the same as the insertion direction of the battery insert box. To prevent the connection failure between the insert box storage rack 20 and the stand 10 resulting from the action of the impact, as shown in FIG. 1 and FIG. 2, along the insertion direction of the battery insert box, the insert box storage rack 20 has an insertion end 201 and a limit end 202 disposed opposite to each other. That is, the direction from the insertion end 201 to the limit end 202 is the insertion direction of the battery insert box. The insertion end 201 allows the battery insert box to pass through, the limit end 202 is configured to abut against the battery insert box, the first column 11 is disposed at the insertion end 201 of the insert box storage rack 20, and the second column 12 is disposed at the limit end 202 of the insert box storage rack 20. That is, when the battery insert box is being inserted, the battery insert box may first pass through the first column 11 and move toward the second column 12 to complete the insertion action. Since the second connecting beam 22 is connected to the second column 12 along a direction perpendicular to the insertion direction of the battery insert box, that is, the direction is perpendicular to the action direction of the impact, the connection is not likely to fail, and thus the configuration stability of the battery insert box in the energy storage frame is secured.

Furthermore, as shown in FIG. 2, FIG. 4, and FIG. 6, the stand 10 further includes a middle column 13 disposed between the first column 11 and the second column 12. The middle column 13 is connected to the upright plate 101, the number of the middle column 13 can be one or plural, and the specific quantity can be set according to the actual use requirements. For example, for an energy storage frame requiring a larger volume and a higher load-bearing, multiple middle columns 13 at intervals are disposed and connected between the first column 11 and the second column 12; for an energy storage frame requiring a small volume and low load-bearing, it is applicable that simply one middle column 13 is disposed between the first column 11 and the second column 12 to ensure the use strength of the stand 10 and minimize the overall weight of the stand. The second connecting beam 22 is connected to the middle column 13 along the second direction Y, and the configuration of the middle column 13 can not only increase the stability of the stand 10 but also improve the connection strength between the stand 10 and the insert box storage rack 20, which further ensures the configuration stability of the battery insert box in the energy storage frame.

Furthermore, as shown in FIG. 2, FIG. 4, and FIG. 6, the first column 11, the second column 12, and the middle column 13 are disposed at equal intervals, that is, the columns in the stand 10 each are disposed at equal intervals. With such an architecture, each column can be subjected to the impact uniformly, thereby ensuring the service life of the stand 10.

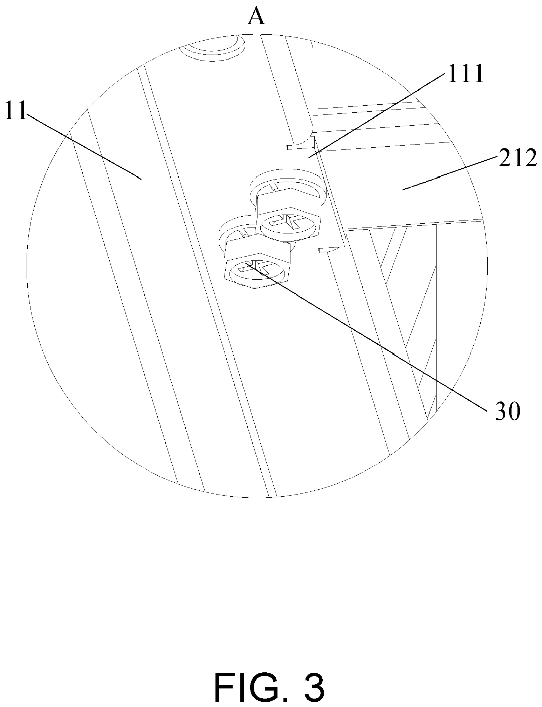

Furthermore, as shown in FIG. 2 and FIG. 3, the first connecting beam 21 includes a support plate 211 and a connecting plate 212, the support plate 211 is configured to support the battery insert box, and the connecting plate 212 is connected to one side of the support plate 211 along the first direction X and disposed below the support plate 211. Specifically, the connecting plate 212 is connected to the front side of the support plate 211, that is, the support plate 211 faces toward one side of the first column 11; the connecting plate 212 is connected to the first column 11 through a first connector 30, that is, the front side of the front beam is connected to the first column 11; and the first connecting beam 21 is connected to the first column 11 through the connecting plate 212, so that the connection between the first connecting beam 21 and the first column 11 is facilitated. In addition, the connecting plate 212 can strengthen the support plate 211 to improve the strength of the support plate 211.

The first connector 30 is a bolt, a fixing pin, or a rivet. For example, a bolt is preferably used as the first connector 30 to facilitate the disassembly and assembly between the first connecting beam 21 and the first column 11.

Note that the connecting plate 212 and the first column 11 may also be connected by welding.

Furthermore, as shown in FIG. 3, a lug 111 is disposed on one side wall of the first column 11, and the lug 111 is connected to the connecting plate 212 through the first connector 30. Specifically, the lug 111 is disposed on the side of the first column 11 adjacent to the insert box storage rack 20, and the lug 111 and the first column 11 are integrally formed to ensure the connection strength between the lug 111 and the first column 11. The configuration of the lugs 111 not only increases the contact area between the first column 11 and the first connecting beam 21 but also facilitates the connection between the first column 11 and the first connecting beam 21.

Furthermore, the support plate 211 and the connecting plate 212 are an integrated structure to ensure the overall strength of the first connecting beam 21. Specifically, the first connecting beam 21 is formed by bending sheet metal, that is, the support plate 211 and the connecting plate 212 are an integrated structure made of sheet metal material. Meanwhile, the support plate 211 and the connecting plate 212 may also be an integrated structure connected by welding.

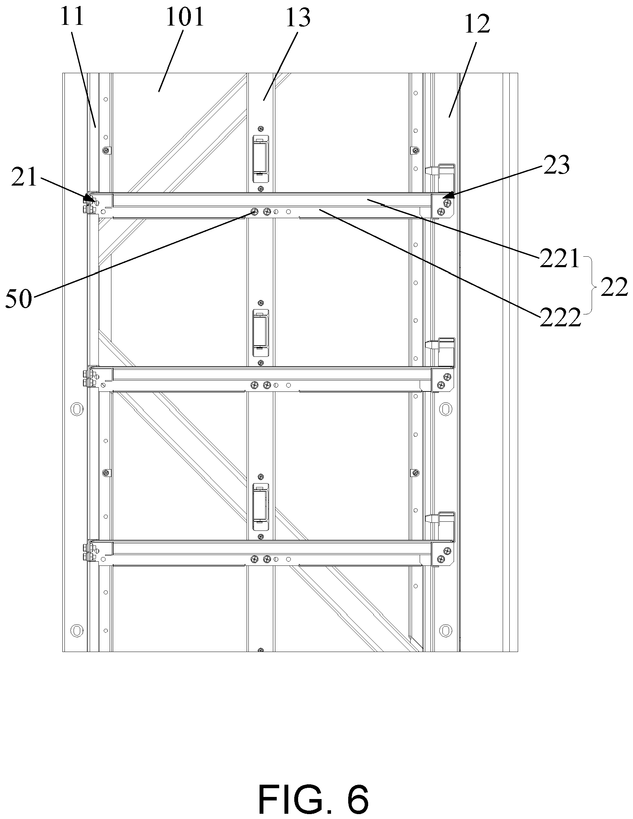

Furthermore, as shown in FIG. 6, the second connecting beam 22 includes a top plate 221 and a side plate 222. The top plate 221 is connected to the top end of the side plate 222, the top plate 221 is configured to support the battery insert box, the side plate 222 is connected to the second column 12 through a second connector 40, and the side plate 222 is connected to the middle column 13 through a third connector 50. The configuration of the side plate 222 increases the contact area between the second connecting beam 22 and the middle column 13, thereby improving the connection strength between the second connecting beam 22 and the middle column 13 and facilitating the connection between the second connecting beam 22 and the middle column 13.

The second connector 40 is a bolt, a fixing pin, or a rivet. For example, a bolt is preferably used as the second connector 40 to facilitate the disassembly and assembly between the second connecting beam 22 and the second column 12. The third connector 50 is a bolt, a fixing pin, or a rivet. For example, a bolt is preferably used as the third connector 50 to facilitate the disassembly and assembly between the second connecting beam 22 and the middle column 13.

Furthermore, the top plate 221 and the side plate 222 are an integrated structure to ensure the overall strength of the second connecting beam 22. Specifically, the second connecting beam 22 is formed by bending sheet metal, that is, the top plate 221 and the side plate 222 are an integrated structure made of sheet metal material. Meanwhile, the top plate 221 and the side plate 222 may also be an integrated structure connected by welding.

Furthermore, to facilitate the insertion of the battery insert box, a polycarbonate (PC) board can be connected to the top plate 221. The PC board has good wear resistance, and the surface is smoother, making it easier for the battery insert box to move to the insert box storage rack 20. Specifically, the PC board is connected to the top plate 221 by bolts to facilitate the disassembly and assembly of the PC board.

In one embodiment of the invention, as shown in FIG. 1, FIG. 2 and FIG. 4, the insert box storage rack further includes a third connecting beam 23. The third connecting beam 23 is configured to limit the battery insert box, the third connecting beam 23 is disposed adjacent to the second column 12 and extends along the second direction Y, and the third connecting beam 23 and the first connecting beam 21 are connected to two ends of the second connecting beam 22, respectively. For example, the insert box storage rack 20 is a rectangular frame structure formed by one first connecting beam 21, two second connecting beams 22, and one third connecting beam 23. The position of the first connecting beam 21 is opposite to the position of the third connecting beam 23, and the positions of the two second connecting beams 22 are opposite to each other.

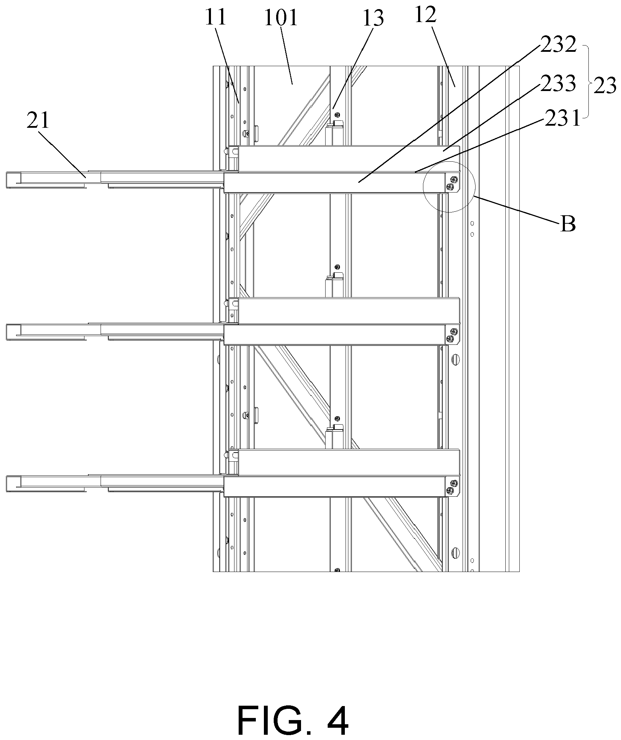

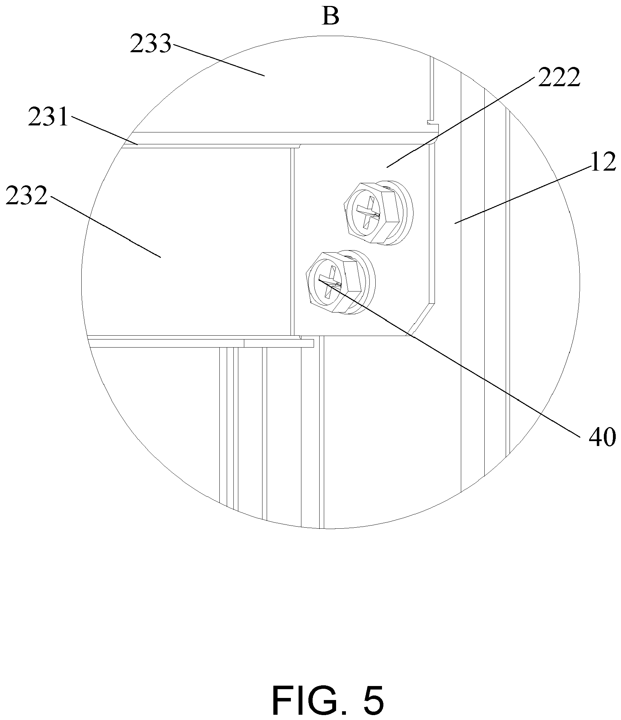

Specifically, as shown in FIG. 4 and FIG. 5, the third connecting beam 23 includes an overlapping plate 231, a reinforcement plate 232, and a limit plate 233. The overlapping plate 231 is configured to support the battery insert box, the reinforcement plate 232 is connected to one side of the overlapping plate 231 along the first direction X and disposed below the overlapping plate 231, and the limit plate 233 is connected to another side of the overlapping plate 231 along the first direction X and is disposed above the overlapping plate 231. Specifically, the reinforcement plate 232 and the limit plate 233 are connected to two sides of the overlapping plate 231, respectively, along the first direction X, and the reinforcement plate 232 and the limit plate 233 are disposed at the upper and lower ends of the overlapping plate 231, respectively. The reinforcement plate 232 can strengthen the overlapping plate 231 to improve the use strength of the overlapping plate 231, and the limit plate 233 can abut against the battery insert box and prevent the battery insert box from being penetrated.

Furthermore, the overlapping plate 231, the reinforcement plate 232, and the limit plate 233 are an integrated structure to ensure the overall strength of the third connecting beam 23. Specifically, the third connecting beam 23 is formed by bending sheet metal, that is, the overlapping plate 231, the reinforcement plate 232, and the limit plate 233 are an integrated structure made of sheet metal material.

Compared with the prior art, the technical solution has the following advantages: with the insert box storage rack and the stand, the energy storage frame of the invention is fixedly connected in two directions, which not only improves the connection strength between the stand and the insert box storage rack but also reduces the risk of the connection position failure resulting from the influence of the insertion force of the battery insert box between the stand and the insert box storage rack, and thus the configuration stability of the battery insert box in the energy storage frame is secured.

### Embodiment 2

Another object of the invention is to provide an energy storage battery cluster including the energy storage frame.

As shown in FIG. 7, the invention further provides an energy storage battery cluster including the energy storage frame 100 and at least one battery insert box 200. The battery insert box 200 is inserted into the energy storage frame 100, and the number of the battery insert boxes 200 can be adjusted according to actual use requirements and the capacity of the energy storage frame 100.

The energy storage battery cluster of the invention includes the energy storage frame and therefore has the advantages of stable structure and stable configuration of the battery insert box.

In summary, with the insert box storage rack and the stand, the energy storage frame of the invention is fixedly connected in two directions, which not only improves the connection strength between the stand and the insert box storage rack but also reduces the risk of the connection position failure resulting from the influence of the insertion force of the battery insert box between the stand and the insert box storage rack, and thus the configuration stability of the battery insert box in the energy storage frame is secured;

In the energy storage frame of the invention, with the configuration of a middle column and the connection between the side beams and the middle column, the stability of the stand can be increased, the connection strength between the stand and the insert box storage rack can be improved, and the configuration stability of the battery insert box in the energy storage frame is further secured.

In the energy storage frame of the invention, the first connecting beam is connected to the first column through the first connector, the second connecting beam is connected to the second column through the second connector, and the side beam is connected to the middle column through the third connector, which facilitates the assembly and disassembly between the stand and the insert box storage rack, thereby saving time and efforts in the assembling operation of the energy storage frame.

The energy storage battery cluster of the invention includes the energy storage frame and therefore has the advantages of stable structure and stable configuration of the battery insert box.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. An energy storage frame, comprising:
a stand (10) comprising a first column (11) and a second column (12) disposed side by side and at intervals; and
an insert box storage rack (20) configured to support a battery insert box, wherein the insert box storage rack (20) is disposed on one side of the stand (10), the insert box storage rack (20) comprises a first connecting beam (21) and a second connecting beam (22), the first connecting beam (21) is connected to the first column (11) along a first direction (X), the second connecting beam (22) is connected to the second column (12) along a second direction (Y), the first direction (X) is parallel to an insertion direction of the battery insert box, and the second direction (Y) is perpendicular to the insertion direction of the battery insert box.

2. The energy storage frame according to claim 1, wherein
along the insertion direction of the battery insert box, the insert box storage rack (20) comprises an insertion end (201) and a limit end (202) disposed opposite to each other, the insertion end (201) allows the battery insert box to pass through, the limit end (202) is configured to abut against the battery insert box, the first column (11) is disposed at the insertion end (201) of the insert box storage rack (20), and the second column (12) is disposed at the limit end (202) of the insert box storage rack (20).

3. The energy storage frame according to claim 1 or claim 2, wherein
the stand (10) further comprises a middle column (13) disposed between the first column (11) and the second column (12), and the second connecting beam (22) is connected to the middle column (13) along the second direction (Y).

4. The energy storage frame according to claim 3, wherein
the first column (11), the second column (12), and the middle column (13) are disposed at equal intervals.

5. The energy storage frame according to claim 1, wherein
the first connecting beam (21) comprises a support plate (211) and a connecting plate (212), the connecting plate (212) is connected to one side of the support plate (211) along the first direction (X) and is disposed below the support plate (211), and the connecting plate (212) is connected to the first column (11) through a first connector (30).

6. The energy storage frame according to claim 5, wherein
a lug (111) is disposed on one side wall of the first column (11), and the lug (111) is connected to the connecting plate (212) through the first connector (30).

7. The energy storage frame according to claim 5, wherein
the support plate (211) and the connecting plate (212) are an integrated structure.

8. The energy storage frame according to claim 3, wherein
the second connecting beam (22) comprises a top plate (221) and a side plate (222), the top plate (221) is connected to a top end of the side plate (222), the side plate (222) is connected to the second column (12) through a second connector (40), and the side plate (222) is connected to the middle column (13) through a third connector (50).

9. The energy storage frame according to claim 8, wherein:
the top plate (221) and the side plate (222) are an integrated structure.

10. An energy storage battery cluster, comprising the energy storage frame according to any one of claims 1-9 and at least one battery insert box, and the battery insert box is inserted in the energy storage frame.
